# EUROPEAN PATENT APPLICATION

(11) **EP 1 608 138 A1**
(43) Date of publication of application: **21.12.2005**
(21) Application number: 04013904.0
(22) Date of filing: 14.06.2004
(51) Int. Cl.: H04M 15/00, H04M 15/10, H04N 5/00

(54) **Charging services for video telephony subscribers**

(71) Applicant: SIEMENS AKTIENGESELLSCHAFT, 80333 München (DE)
(72) Inventor: Aspasia, Antoniou, 14231, Nea lonia Attikis-Athens (GR); Arachovas, Antonios, 16344, Llioupoli Attikis Athens (GR); Karalis, Ilias, 18538 Pireaus (GR)

(57) **Abstract**

Charging of video telephony is provided. A video telephony supporting protocol supports video telephony over a telecommunications network. A gatekeeper controls the communications relating to the video telephony and tracks call charge data. Wherein the gatekeeper sends the call charge data to a user of the video telephony.

## Description

The invention provides "Charging" on the Videotelephony IP solution. In addition, useful enhancements are proposed, as well as the technical problems that are solved by them, where are advice on charge (AOC) Itemized Bill Reques, Credit Limit Supervision, for example.

Up until now, charging for video telephony has not been provided. Nor have such enhancements been implemented for the Videotelephony IP solution up to now.

In the H.323 standard, used for IP switching in telecommunications today, there is proscribed a Gatekeeper for controlling the components that make up an H.323 network. The Gatekeeper generates the tickets when different points are triggered and save internal log files which include the duration of all the calls (start time, end time, total call duration). Then the operator administrates all those files by calculating the charging. With this method, the subscriber is never being notified about his/her accounting on the TV screen, does not have the opportunity to request for an Itemize Bill, as well as to specify a credit limit supervision. Nor does the "Set Top Box" (STBs) support at the "On Screen Display" (OSD) menu such functionalities or relevant ones.

The charging of videotelephony, three proposed solutions, and the extension of the OSD give some important advantages.

As already mentioned, charging of video telephony has not before been provided
Videotelephony will be enhanced with new offered services (Advice of Charge, Itemized Bill Request, Credit Limit Supervision). This means that Sales will have now more reasons to promote Videotelephony and approach the several operators worldwide.
Such implementations will give the opportunity to the operators, to approach their customers more efficiently. Flexible handling of the newly introduced enhancements via the On Screen Display (OSD) menu of the Set Top Box (STB).

The On Screen Display (OSD) menu will be constructed in such way that it will be quite easy for the end-user to make his/her further steps.

For first time such charging enhancements will be introduced to the solution of the IP Videotelephony. Operators worldwide are always interested in charging issues and in attractive services, which allows them to approach their customers efficiently. On the other hand, the end-users are also always interested in charging issues. The charging services are attractive for both the operators or the end-users.

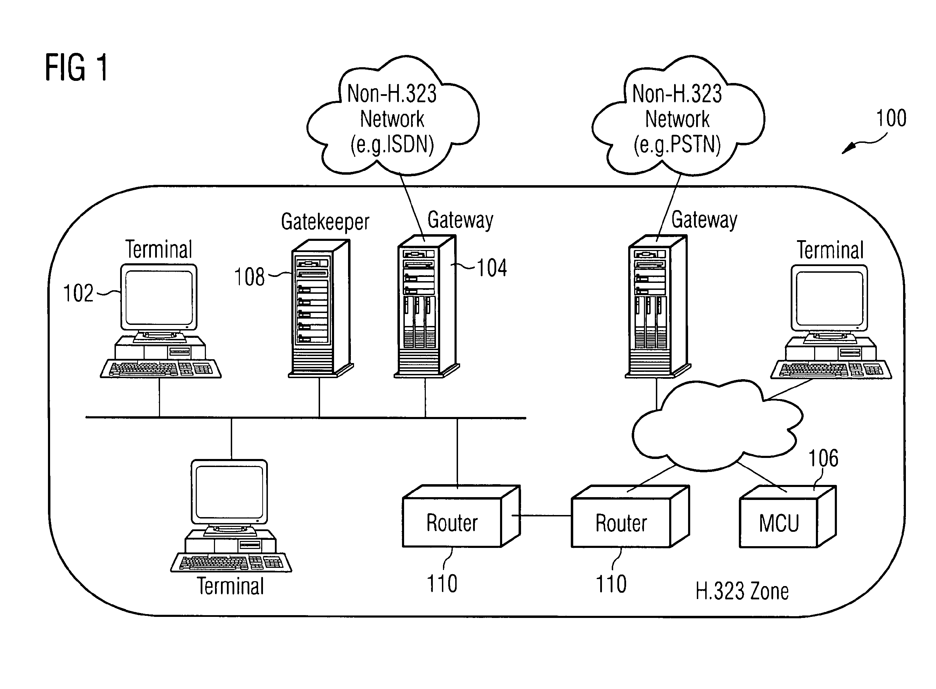

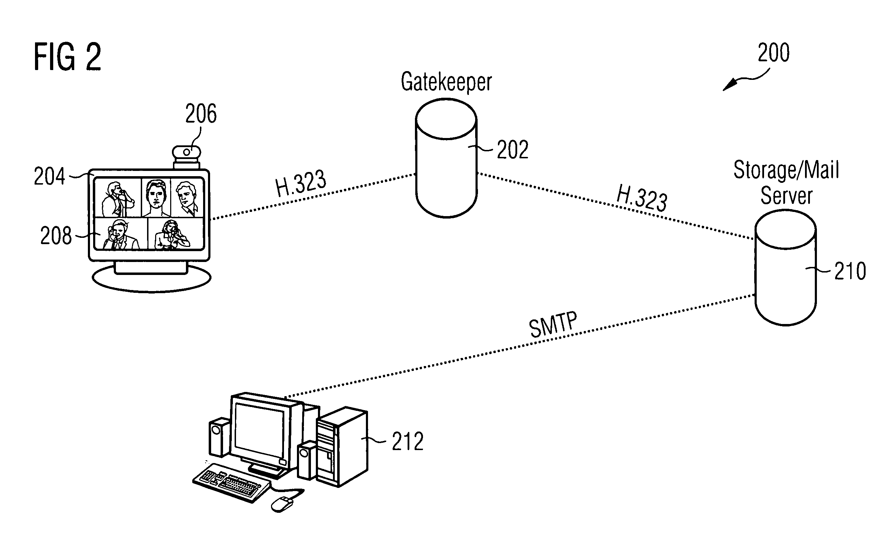

Fig. 1 illustrates the H. 323 network; and Fig. 2 illustrates the Gatekeeper.

Now, with respect to Fig. 1, the H. 323 network of the invention. The H.323 standard is a cornerstone technology for the transmission of real-time audio, video, and data communications over packet-based networks. It specifies the components, protocols, and procedures providing multimedia communication over packet-based networks. Packet-based networks include IP-based (including the Internet) or Internet packet exchange (IPX)-based local-area networks (LANs), enterprise networks (ENs), metropolitan-area networks (MANs), and wide-area networks (WANs). H.323 can be applied in a variety of mechanisms-audio only (IP telephony); audio and video (videotelephony); audio and data; and audio, video and data. H.323 can also be applied to multipoint-multimedia communications.

An H.323 network 100 is a collection of all terminals 102, gateways 104, and MCUs 106 managed by a gatekeeper 108. A network may be independent of network topology and may be comprised of multiple network segments that are connected using routers 110 or other devices.

Used for real-time bidirectional multimedia communications, an H.323 terminal 102 can either be a personal computer (PC) or a stand-alone device, running an H.323 and the multimedia applications. It supports audio communications and can optionally support video or data communications. Because the basic service provided by an H.323 terminal is audio communications, an H.323 terminal plays a key role in IP-telephony services. An H.323 terminal can either be a PC or a stand-alone device, running an H.323 stack and multimedia applications. The primary goal of H.323 is to interwork with other multimedia terminals. H.323 terminals are compatible with H.324 terminals on SCN and wireless networks, H.310 terminals on B-ISDN, H.320 terminals on ISDN, H.321 terminals on B-ISDN, and H.322 terminals on guaranteed QoS LANs. H.323 terminals may be used in multipoint conferences.

A gateway 104 connects two dissimilar networks. An H.323 gateway provides connectivity between an H.323 network and a non-H.323 network. For example, a gateway can connect and provide communication between an H.323 terminal and SCN networks (SCN networks include all switched telephony networks, e.g., public switched telephone network [PSTN]). This connectivity of dissimilar networks is achieved by translating protocols for call setup and release, converting media formats between different networks, and transferring information between the networks connected by the gateway. A gateway is not required, however, for communication between two terminals on an H.323 network.

A gatekeeper 108 can be considered the brain of the H.323 network. It is the focal point for all calls within the H.323 network. Gatekeepers provide important services such as addressing, authorization and authentication of terminals and gateways; bandwidth management; accounting; billing; and charging. Gatekeepers may also provide call-routing services.

The gatekeeper 108 further provides address translation and control access to the LAN for H.323 terminals and gateways. The gatekeeper can provide other services to the H.323 terminals and gateways, such as bandwidth management and locating gateways. A gatekeeper maintains a registry of devices in the multimedia network. The devices register with the gatekeeper at startup and request admission to a call from the gatekeeper.

Gatekeepers are also responsible for admission control. This means that the gatekeeper keeps track of all the gateways in its domain and they ask its permission before placing a call. The gatekeeper usually permits or denies a call based on the number of calls or the bandwidth required.

A gateway provides translation of protocols for call setup and release, conversion of media formats between different networks, and the transfer of information between H.323 and non-H.323 networks. An application of the H.323 gateway is in IP telephony, where the H.323 gateway connects an IP network and SCN network (e.g., ISDN network).

On the H.323 side, a gateway runs H.245 control signaling for exchanging capabilities, H.225 call signaling for call setup and release, and H.225 registration, admissions, and status (RAS) for registration with the gatekeeper. On the SCN side, a gateway runs SCN-specific protocols (e.g., ISDN and SS7 protocols).
Terminals communicate with gateways using the H.245 control-signaling protocol and H.225 call-signaling protocol. The gateway translates these protocols in a transparent fashion to the respective counterparts on the non-H.323 network and vice versa. The gateway also performs call setup and clearing on both the H.323-network side and the non-H.323-network side. Translation between audio, video, and data formats may also be performed by the gateway.

Audio and video translation may not be required if both terminal types find a common communications mode. For example, in the case of a gateway to H.320 terminals on the ISDN, both terminal types require G.711 audio and H.261 video, so a common mode always exists. The gateway has the characteristics of both an H.323 terminal on the H.323 network and the other terminal on the non-H.323 network it connects.

Gatekeepers are aware of which endpoints are gateways because this is indicated when the terminals and gateways register with the gatekeeper. A gateway may be able to support several simultaneous calls between the H.323 and non-H.323 networks. In addition, a gateway may connect an H.323 network to a non-H.323 network. A gateway is a logical component of H.323 and can be implemented as part of a gatekeeper or an MCU.

Gatekeepers provide call-control services for H.323 endpoints, such as address translation and bandwidth management as defined within RAS. If they are present in a network, however, terminals and gateways must use their services. The H.323 standards both define mandatory services that the gatekeeper must provide and specify other optional functionality that it can provide.

An optional feature of a gatekeeper is call-signaling routing. Endpoints send call-signaling messages to the gatekeeper, which the gatekeeper routes to the destination endpoints. Alternately, endpoints can send call-signaling messages directly to the peer endpoints. This feature of the gatekeeper is valuable, as monitoring of the calls by the gatekeeper provides better control of the calls in the network. Routing calls through gatekeepers provides better performance in the network, as the gatekeeper can make routing decisions based on a variety of factors, for example, load balancing among gateways.

Calls originating within an H.323 network may use an alias to address the destination terminal. Calls originating outside the H.323 network and received by a gateway may use an E.164 telephone number (e.g., 310-442-9222) to address the destination terminal. The gatekeeper translates this E.164 telephone number or the alias into the network address (e.g., 204.252.32:456 for an IP-based network) for the destination terminal. The destination endpoint can be reached using the network address on the H.323 network.

The gatekeeper can control the admission of the endpoints into the H.323 network. It uses RAS messages, admission request (ARQ), confirm (ACF), and reject (ARJ) to achieve this. Admissions control may be a null function that admits all endpoints to the H.323 network.

The gatekeeper provides support for bandwidth control by using the RAS messages, bandwidth request (BRQ), confirm (BCF), and reject (BRJ). For instance, if a network manager has specified a threshold for the number of simultaneous connections on the H.323 network, the gatekeeper can refuse to make any more connections once the threshold is reached. The result is to limit the total allocated bandwidth to some fraction of the total available, leaving the remaining bandwidth for data applications. Bandwidth control may also be a null function that accepts all requests for bandwidth changes.

H.225 call signaling is used to set up connections between H.323 endpoints (terminals and gateways), over which the real-time data can be transported. Call signaling involves the exchange of H.225 protocol messages over a reliable call-signaling channel. For example, H.225 protocol messages are carried over TCP in an IP-based H.323 network. H.225 messages are exchanged between the endpoints if there is no gatekeeper in the H.323 network. When a gatekeeper exists in the network, the H.225 messages are exchanged either directly between the endpoints or between the endpoints after being routed through the gatekeeper. The first case is direct call signaling. The second case is called gatekeeper-routed call signaling. The method chosen is decided by the gatekeeper during RAS-admission message exchange.

The present invention is intended to provide to the Videotelephony subscriber the possibility to invoke charging. This is done using the advice of charge service (AOC) on all calls (permanent) or on a per call basis (after a request), so as to receive charging information (charging/currency units) at the beginning/during /end (only one or any other preferred combination of all of them- similar to AOC-S/D/E) of the call by the use of a special submenu in the On Screen Display menu. The Gatekeeper assembles and converts the collected accounting statistics such as start time, end time, total call duration to currency/units to the appropriate charging information (recorded charges) for the call and send it to the user in a facility or information message, on a per call or permanent basis depending on the user request, in one of the call control messages of the H323 protocol stuck. A "during the call" request of AOC is also provided. The gatekeeper keeps continuous track of the call and at any given time can derive the current duration of the call and hence calculate the charging up to that point. The same is true for per/call - permanent charging with the only difference that the charging trigger is automatic at the end of each call (for the second case only).

In order to accomplish AOC, the STB software is modified to include a new user-friendly submenu. The submenu is programmed to provide the user to request and receive the charging information of his/her services on line.

This means that the Charging functionality adaptation (currency/units) is added within the Gatekeepers general functionality. This additional service provides the operator with the ability to replace its post processing system and reduces the used software program. Moreover, this proposal makes the handling of the charging more flexible and efficient.

As already mentioned, the gatekeeper is responsible for charging the connection. The charging is time based on a per call basis using accounting tickets at distinctive moments during the call (start, intermediate, end). The applied format is preferably a simple ASCII format and not an AMA one. This allows to be charged, depending on the kind of the established connection (Audio/video). In the case of a "Call jump" (possibly beginning with a PSTN call and then switch to video call) a ticket is only provided for the video- call (charging for the PSTN call is as normal). For the direct IP-call, two tickets will be generated: One for the voice call and a second one for the video part. This allows the operator to apply different tariffs to the voice portion and the video portion.

Separate tariff billing is possible using an H.245 Proxy server. The Gatekeeper generates the tickets and saves internal log files, which include the duration of all the calls (start/end time), as well as the destination numbers. Then the operator administrates all the charging relevant generated files and according to its post processing system separates the accounting for each one of the subscribers. According to the invention, such information is provided to the end-user directly from the Gatekeeper, so that the user can be informed for the charging of the active call online.

One innovation to proceed with the implementation of charging the user directly is that the Gatekeeper converts the collected accounting statistics (start time, end time, total call duration) to currency/units (minor adaptations are prerequisite from the Gatekeepers side). Thereafter, the appropriate charging information (recorded charging), concerning only the end-users that are subscribed to this service, is transmitted via FTP and stored in a server and updated daily, by the Gatekeeper.

An alternative solution to the above would be the operator to convert the collected accounting statistics (start time, end time, total call duration) to currency/units, via its post processing system. Afterwards, the appropriate charging information (recorded charging), concerning only the end-users that are subscribed to this service, is transmitted via FTP by the operator and stored in a server and updated daily by the Gatekeeper.

A new option is introduced on the On Screen Display (OSD) menu, that enables the subscriber to activate the service online. As soon as the service is enabled, the Set Top Box (STB) (see Fig. 2) originates a SETUP message to the Gatekeeper. Through an address translation rule the Gatekeeper redirects the SETUP message to the appropriate server. This server also acts as a mail server. This means that the mail server will originate an email with standard format (called party number, call duration, currency/units) to the subscribed user, as frequent as he/she has requested. Please note that as soon as the mail server gets the SETUP message, will send a Release Complete message to the Gatekeeper and the Gatekeeper will send a notification to the end-user that the service is activated.

The communication between the end-user (Set Top Box), the Gatekeeper and Storage server is preferably performed via the H323 protocol. In case the Storage server does not support such a protocol stack, then a Media Gateway is inserted between the Gatekeeper and the Storage server, so as the H323 protocol to be converted to the actual one that the Server supports.

The proposed solution comprises a useful extension to the Videotelephony IP solution. By introducing the new charging service of the Itemized Bill Request, Videotelephony becomes more useful and interesting for the end-user. In addition to these offered services and the improved quality of videotelephony, another significant point is it will cost less overhead because the user need not the us without waiting till the time the operator sends us the bill.

Another advantage of this proposal, apart from the ones that are already mentioned, is that the implementation is located on the Set Top Box (STB) side as far as the new option on the On Screen Display (OSD) menu is concerned and on the Gatekeeper's side with minor adaptations as far as the charging conversion is concerned. Since the Gatekeeper supports the functionality to forward the received messages, depending on the address translation rule, no implementation is necessary for the redirection of the SETUP message.

Another significant advantage is that the Charging functionality (currency/units) is added within the Gatekeepers general functionality. This means that the Gatekeeper is offered with an additional service. Such implementation gives the ability to the operator to replace its post processing system and reduces the used software program, as far as charging is concerned. Moreover, this proposal makes the handling of the charging issues more flexible and efficient.

Another service provided by the invention is the Itemized Bill Request. Gatekeeper generates the tickets when different points are triggered (Audio/Video) and saves internal log files, which includes the duration of all the calls (start/end time), as well as the destination numbers. Normally, operator administrates all the charging relevant generated files and according to its post processing system separates the accounting for each one of the subscribers.

The proposed enhancement allows the Videotelephony end-user to make as Itemized Bill Request (IBR) and inform himself/herself about the Directory Numbers (DN) of the established connections, the duration of all the calls, as well as information about how much each call was charged. It introduces a new charging service on the Gatekeeper's side. With this new service, the operator has the ability to replace the post processing system he was using up to now, with a new one that will be executed automatically by the Gatekeeper.

Credit Limit Supervision is also provided for videotelephony Gatekeeper assembles and converts the collected accounting statistics such as the total call duration to currency/units to the appropriate charging information (recorded charges) for the call. A new option is introduced on the On Screen Display (OSD) menu, in order to give to the subscriber the possibility to enable the credit limit supervision service. After entering the amount of currency/units that the subscriber doesn't want to exceed (credit limit) a H225 message is sent to the Gatekeeper with a facility and the information about the limit. The Gatekeeper forwards the message to the billing server that understands h323 protocol. This server has a table with records for the credit limit supervision feature. The Gatekeeper enhanced in order to be able to send charging information for calls in a call-by-call base.
Before the subscriber uses the feature he/she has to be subscribed by the operator in the database of the Gatekeeper. The Gatekeeper then sends for this subscriber charging information after each call to the billing server. The billing server then checks if the limit is exceeded. If yes then an alarm message is sent to the operator and the operator blocks the subscriber on the Gatekeeper or LDAP side manually or via script. No more calls are allowed and the subscriber receives a busy tone or announcement if she/he tries to setup a new call. The end user is also given the possibility to limit his video calls sessions depending on the total amount of money she/he wants to spend for a period of time.

Each of the charging enhancements will now be explained with reference to Fig. 2:
As in Fig. 1, the novel network 200 is shown. There is a Gatekeeper 202 connected to a user terminal 204 having a STB 206, which may have a video camera, and an screen display (OSD) 208. A storage/mail server 210 stores the information and an PC 212 allows the user to receive emails about the charging.

The Advice of Charge supplementary service allows the user to be informed of usage-based charging information. So the user enters at the On Screen Display (OSD) menu. The subscriber will be able to set the service to "ON" or "OFF", depending on if he/she wants to activate or deactivate the service. The submenus that will be added to the main menu of the OSD will be:

AOC permanent: → AOC at set up : on/off (Charging information at "call setup time" (AOC-S) enables a user to receive information of the charging amount for a call, when the call is originated
**→** AOC during : on/off (Charging information during the call (AOC-D) enables a user to receive information of the charging amount for a call, when the call is active)
**→** AOC at the end : on/off (Charging information at the end of call (AOC-E) enables a user to receive information of the charging amount for a call, when the call is released)

If this supplementary service is subscribed for all calls, GK should automatically activate the subscribed AOC at each call setup.

AOC per call on request: **→** AOC at set up: on/off (Charging information at "call setup time" (AOC-S) enables a user to receive information of the charging amount for a call, when the call is originated on user request and only for the lifetime of the call)
→ AOC during: on/off (Charging information during the call (AOC-D) enables a user to receive information of the charging amount for a call, when the call is active on user request and only for the lifetime of the call)
-> AOC at the end: on/off (Charging information at the end of call (AOC-E) enables a user to receive information of the charging amount for a call, when the call is released on user request and only for the lifetime of the call)

In the case of the AOC per call on request the user shall include in the setup message a Facility information element containing a ChargingRequest invoke component which will be acknowledge from HIQ20 by Returning ChargingRequest return result component within a Facility information element in one of the call control messages including the charging information.
The subscriber should dial for each case an access code for the feature usage and the called party number (e.g. *10*7009 where *10 is the access code for the AOC during the call per call). Afterwards the VidTel user should be able to view his/her charging info online from the on screen display special panel (e.g.
CHARGE: 15 EUROs)

For Itemized Bill Request the user enters the On Screen Display (OSD) menu one of the following printed options:
Itemized Bill Request: ON/OFF

The subscriber will be able to set the service to "ON" or "OFF", depending whether he/she wants to activate or deactivate the service. In case the subscriber decides to enable the service, then he/she will receive the itemized bill via email. Therefore, an email address should be also specified, as well as how often he/she wants to receive the updated charging information. The following fields, for example, will now be printed on the screen:
Please type your EMAIL: ........................................
Select how often you would like to be notified: DAYS ...... , WEEKS ...... , MONTHS ......

Now that the service "Itemized Bill Request" (IBR) is enabled, the Set Top Box (STB) of the subscriber will originate a SETUP message to the Gatekeeper, in which the Calling Party Number and the email address of the served user will be included.

Through an address translation rule, the Gatekeeper will redirect the SETUP message to the appropriate server. This server can act also as a mail server. This means that the mail server will originate an email with a standard format (called party number, call duration, currency/units) to the subscribed user, as frequent as he/she has requested (e.g. every 15 days).

For Credit Limit Supervision, the subscriber sets a limit for credit supervision. After pressing OK the information is sent to the billing server. After each call the billing server checks if the limit is exceeded. Busy tone or announcement will be applied at the next call attempt.

Of course, these are but examples and other OSD menu options are available.

## Claims

1. An apparatus for charging of video telephony, comprising:
a video telephony supporting protocol that supports video telephony over a telecommunications network;
a gatekeeper that controls the communications relating to the video telephony and tracks call charge data; and
wherein said gatekeeper sends the call charge data to a user of the video telephony.

2. The apparatus of claim 1, further comprising a charging service that the user subscribes to that provides the call charge data in a predetermined format.

3. The apparatus of claim 2, wherein the charging service is advice of charge (AOC).

4. The apparatus of claim 2, wherein the charging service is itemized bill request.

5. The apparatus of claim 2, wherein the charging service is credit limit supervision.

6. The apparatus of claim 1, wherein the gatekeeper keeps records for an audio portion of the video telephony and a video portion separately.

7. The apparatus of claim 1, further comprising a user terminal with an on screen display that provides a user interface for reporting the call charge data.

8. A method for charging of video telephony, comprising the steps of:
providing a video telephony supporting protocol that supports video telephony over a telecommunications network;
controlling a gatekeeper to the communications relating to the video telephony and tracks call charge data; and
sending the call charge data from the gatekeeper to a user of the video telephony.

9. The method of claim 8, further comprising the step of providing a charging service that the user subscribes to that provides the call charge data in a predetermined format.

10. The method of claim 9, wherein the charging service is advice of charge (AOC).

11. The method of claim 9, wherein the charging service is itemized bill request.

12. The method of claim 9, wherein the charging service is credit limit supervision.

13. The method of claim 8, further comprising the step that the gatekeeper keeps records for an audio portion of the video telephony and a video portion separately.

14. The method of claim 7, further comprising the step of providing at a user terminal an on screen display that provides a user interface for reporting the call charge data.
